# EUROPÄISCHE PATENTSCHRIFT

(11) **EP 4 314 688 B1**
(45) Veröffentlichungstag und Bekanntmachung des Hinweises auf die Patenterteilung: **05.08.2026**
(21) Anmeldenummer: 22700844.8
(22) Anmeldetag: 21.01.2022
(51) Int. Cl.: F28D 19/04, B21D 11/22, B21D 53/02, B21D 53/04

(54) **FIXIERVORRICHTUNG ZUR VERFESTIGUNG DES GEFÜGES EINES ROTATIONSWÄRMETAUSCHERS**
FIXING DEVICE FOR REINFORCING THE JOINT OF A ROTARY HEAT EXCHANGER
DISPOSITIF DE FIXATION PERMETTANT DE RENFORCER LE JOINT D'UN ÉCHANGEUR DE CHALEUR ROTATIF

(30) Priorität: 26.03.2021 DE 102021107629
(43) Veröffentlichungstag der Anmeldung: 07.02.2024
(73) Patentinhaber: Klingenburg GmbH, 45968 Gladbeck (DE)
(72) Erfinder: KLEINDIENST, Jan, 45966 Gladbeck (DE)
(74) Vertreter: Schneiders & Behrendt Bochum
(86) Internationale Anmeldenummer: PCT/EP2022/051316
(87) Internationale Veröffentlichungsnummer: WO 2022/199900

(56) Entgegenhaltungen:
- EP-A2- 1 138 368
- FR-A1- 2 086 024
- JP-A- S5 818 090
- US-A- 3 800 859
- US-A- 4 191 241

## Beschreibung

Die Erfindung bezieht sich auf eine Fixiervorrichtung zur Verfestigung des Gefüges eines Rotationswärmetauschers, der ein Nabenteil und ein Wärmespeicherteil aus alternierend gewickelten gewellten und planen Lagen aufweist. JP S58 18090, zum Beispiel, offenbart eine Fixiervorrichtung gemäss dem Oberbegriff des Patentanspruchs 1.

Im Betriebseinsatz werden derartige Rotationswärmetauscher bei unterschiedlichen Temperaturen und Drücken von Fluiden durchströmt, wodurch diese im Normalbetrieb mit einer Rotationsbewegung beaufschlagten Rotationswärmetauscher und insbesondere deren Wärmespeicherteile zum Teil erheblichen mechanischen Belastungen ausgesetzt werden. Derartige mechanische Belastungen können zu Beschädigungen insbesondere des Wärmespeicherteils des Rotationswärmetauschers führen, die ihrerseits erhebliche Beeinträchtigungen des Betriebs derartiger Rotationswärmetauscher zur Folge haben können.

Ausgehend von dem vorstehend geschilderten Stand der Technik liegt der Erfindung die Aufgabe, eine Fixiervorrichtung zur Verfestigung des Gefüges eines Rotationswärmetauschers zu schaffen, die mit einem möglichst geringen technisch-konstruktiven Aufwand sicherstellen kann, dass Beschädigungen insbesondere im Wärmespeicherteil eines Rotationswärmetauschers langfristig und zuverlässig verhindert werden können.

Diese Aufgabe wird erfindungsgemäß durch eine Fixiervorrichtung gemäss dem Anspruch 1, zur Verfestigung des Gefüges eines Rotationswärmetauschers gelöst, in der der Rotationswärmetauscher ortsfest angeordnet werden kann, wobei die Fixiervorrichtung eine am Außenumfang des in der Fixiervorrichtung angeordneten Rotationswärmetauschers angeordnete Schraubbohrvorrichtung aufweist, mittels der zumindest eine Schraubspeiche von der Außenmantelfläche des Rotationswärmetauschers durch die gewellten und planen Lagen des Wärmespeicherteils des Rotationswärmetauschers bis in dessen Nabenteil einbohr- bzw. einschraubbar ist. Durch die durch das Wärmespeicherteil in das Nabenteil des Rotationswärmetauschers eingeschraubten Schraubspeichen wird das Gefüge des Rotationswärmetauschers mit einem geringen technisch-konstruktiven Aufwand erheblich verfestigt. Insbesondere werden aufgrund der in den Rotationswärmetauscher eingebrachten Schraubspeichen Relativbewegungen der alternierend gewickelten gewellten und planen Lagen zueinander zuverlässig verhindert. Des Weiteren wird durch die mittels der Schraubspeichen erreichte Fixierung des Abstands zwischen der Außenmantelfläche des Rotationswärmetauchers und dessen Nabenteil sichergestellt, dass auch die Abstände zwischen den gewellten und planen Lagen des Wärmespeicherteils des Rotationswärmetauchers konstant bleiben.

Um den Rotationswärmetauscher in fester räumlicher Zuordnung in der Fixiervorrichtung anzuordnen, ist es vorteilhaft, wenn die Fixiervorrichtung ein dem Nabenteil des Rotationswärmetauschers zugeordnetes erstes Fixierglied und ein der Außenmantelfläche des Rotationswärmetauschers zugeordnetes zweites Fixierglied aufweist. In der in der Fixiervorrichtung ortsfesten Anordnung kann der Rotationswärmetauscher dann mit den Schraubspeichen versehen werden. Nach Lösen der Fixierglieder kann der Rotationswärmetauscher in der Fixiervorrichtung in eine andere Drehstellung verbracht werden, in der dann - nach Fixierung des Rotationswärmetauschers in der Fixiervorrichtung mittels der beiden Fixierglieder - eine weitere Schraubspeiche bzw. weitere Schraubspeichen in den Rotationswärmetauscher eingebracht werden können.

Um eine zuverlässige Richtungsvorgabe für die in den Rotationswärmetauscher einzubringenden Schraubspeichen zu gewährleisten, ist es vorteilhaft, wenn das zweite Fixierglied der Fixiervorrichtung, das am Außenumfang des Rotationswärmetauschers angeordnet ist, ein Führungsteil mit zumindest einer Durchbrechung aufweist, durch die hindurch eine Schraubspeiche mittels der Schraubbohrvorrichtung in den Rotationswärmetauscher einbohr- bzw. einschraubbar ist. Hierbei wird durch die gegenseitige Anordnung der Schraubbohrvorrichtung an der Fixiervorrichtung und des Rotationswärmetauschers in der Fixiervorrichtung sichergestellt, dass die Einbringung der Schraubspeiche in den Rotationswärmetauscher in möglichst exakter Radialrichtung des Rotationswärmetauschers erfolgt.

Wenn das Führungsteil zwei Durchbrechungen aufweist, die in Axialrichtung des Rotationswärmetauschers zueinander beabstandet sind und jeweils etwa denselben Abstand zu der ihnen jeweils zugeordneten Stirnfläche des Rotationswärmetauschers aufweisen, können mittels eines Arbeitsvorgangs der Schraubbohrvorrichtung zwei Schraubspeichen in den Rotationswärmetauscher eingebracht werden.

In einfacher Weise lässt sich der Einbohr- bzw. Einschraubvorgang bewerkstelligen, wenn die Schraubbohrvorrichtung der Fixiervorrichtung zumindest eine Führungsschiene aufweist, die parallel zur Radialrichtung des in der Fixiervorrichtung angeordneten Rotationswärmetauschers verläuft und längs der ein Vorschubschlitten der Schraubbohrvorrichtung zwecks Einbohren bzw. Einschrauben der Schraubspeiche bzw. der Schraubspeichen in den Rotationswärmetauscher verfahrbar ist. Selbstverständlich ist es möglich, je nach Auslegung der Schraubbohrvorrichtung auch mehr als zwei Schraubspeichen mittels eines einzigen Hub- bzw. Vorschubvorgangs in den Rotationswärmetauscher einzubringen.

Bei einem vorzugsweise unter Zuhilfenahme der vorstehend geschilderten Fixiervorrichtung zu realisierenden Verfahren zur Herstellung eines Rotationswärmetauschers wird um ein Nabenteil des Rotationswärmetauschers ein Wärmespeicherteil aus alternierend gewellten und planen Lagen gewickelt. Zur Ausgestaltung einer festen Gefügestruktur des Rotationswärmetauschers werden sich vom Nabenteil desselben zur Außenumfangsfläche des Wärmespeicherteils erstreckende Speichenglieder in den Rotationswärmetauscher eingebracht, wobei als Speichenglieder des Rotationswärmetauschers Schraubspeichen eingesetzt werden, die von der Außenmantelfläche des Wärmespeicherteils des Rotationswärmetauschers her durch die gewellten und planen Lagen des Wärmespeicherteils des Rotationswärmetauschers unter Ausbildung von Durchbrechungen in den gewellten und planen Lagen des Wärmespeicherteils in das Nabenteil des Rotationswärmetauschers eingeschraubt werden, bis sie mit den Unterflächen ihrer Schraubköpfe an der Außenmantelfläche des Wärmespeicherteils anliegen.

Ein erfindungsgemäßer Rotationswärmetauscher wird gemäß dem vorstehend erläuterten Verfahren hergestellt und hat dann ein mechanisches Gefüge, das durch Schraubspeichen verfestigt bzw. verstärkt ist, die in der vorstehend geschilderten Fixiervorrichtung in den Rotationswärmetauscher eingebracht worden sind.

Im Folgenden wird die Erfindung anhand einer Ausführungsform unter Bezugnahme auf die Zeichnung näher erläutert.

Es zeigen:
- Figur 1: eine perspektivische Prinzipdarstellung einer Ausführungsform einer erfindungsgemäßen Fixiervorrichtung zur Verfestigung des Gefüges eines Rotationswärmetauschers;
- Figur 2: eine perspektivische Prinzipdarstellung eines in der in Figur 1 gezeigten Ausführungsform der erfindungsgemäßen Fixiervorrichtung hinsichtlich seines Gefüges verfestigten Rotationswärmetauschers; und
- Figur 3: eine perspektivische vergrößerte Teildarstellung eines in der in Figur 1 gezeigten erfindungsgemäßen Fixiervorrichtung hinsichtlich seines Gefüges verfestigten Rotationswärmetauschers.

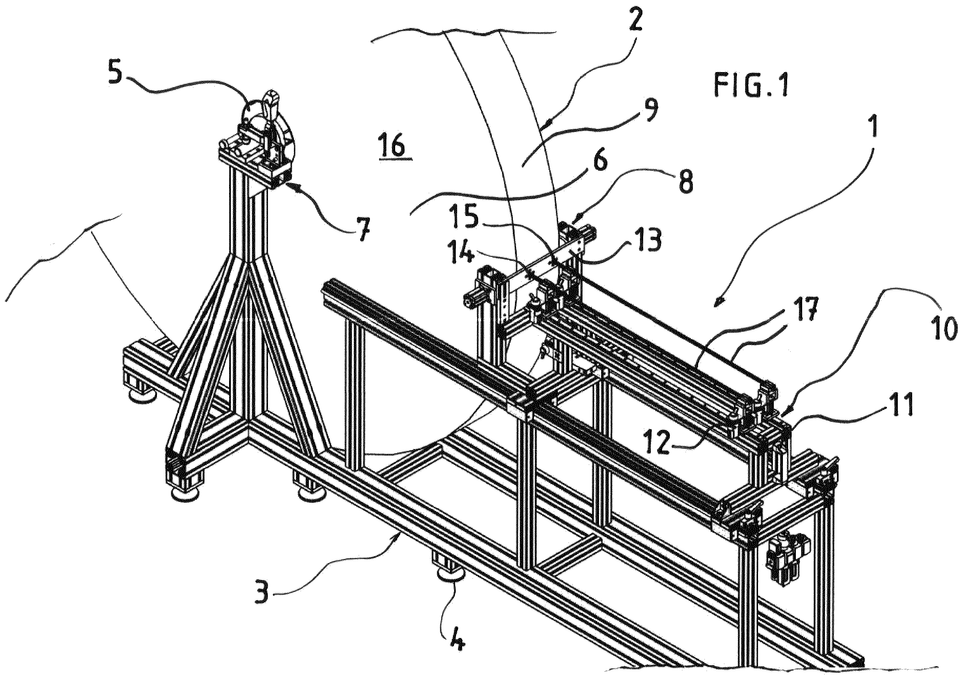

Eine in Figur 1 in einer perspektivischen Prinzipdarstellung gezeigte Ausführungsform einer erfindungsgemäßen Fixiervorrichtung 1 zur Verfestigung des Gefüges eines ebenfalls in Figur 1 gezeigten Rotationswärmetauschers 2 hat einen Tragrahmen 3, der auf Standgliedern 4 ruht.

In der Fixiervorrichtung 1 bzw. in deren Tragrahmen 3 ist der Rotationswärmetauscher 2 in einer festen räumlichen Zuordnung anordbar.

Der Rotationswärmetauscher 2 hat ein Nabenteil 5 und ein das Nabenteil 5 umgebendes Wärmespeicherteil 6, das aus alternierend gewickelten, in Figur 1 nicht im Einzelnen gezeigten gewellten und planen Lagen ausgebildet ist.

Am Tragrahmen 3 der Fixiervorrichtung 1 sind ein erstes Fixierglied 7 und ein zweites Fixierglied 8 angebracht.

Das erste Fixierglied 7 ist so am Tragrahmen 3 der Fixiervorrichtung 1 angeordnet, dass mittels des ersten Fixierglieds 1 ein Fixiereingriff zwischen diesem und dem Nabenteil 5 des Rotationswärmetauschers 2 hergestellt werden kann. Das zweite Fixierglied 8 ist so am Tragrahmen 3 der Fixiervorrichtung 1 angeordnet, dass mittels des zweiten Fixierglieds 8 ein Fixiereingriff zwischen diesem und einem an einer Außenmantelfläche 9 des Rotationswärmetauschers 2 angeordneten Bereich des Rotationswärmetauschers 2 hergestellt werden kann.

Durch Herstellung des Fixiereingriffs zwischen dem ersten Fixierglied 7 der Fixiervorrichtung und dem Nabenteil 5 des Rotationswärmetauschers sowie des Fixiereingriffs zwischen dem zweiten Fixierglied 8 der Fixiervorrichtung 1 und dem an der Außenmantelfläche 9 des Rotationswärmetauschers 2 angeordneten Bereich des Rotationswärmetauschers 2 kann der Rotationswärmetauscher 2 in Bezug auf den Tragrahmen 3 der Fixiervorrichtung 1 ortsfest angeordnet werden.

Im in Radialrichtung des Rotationswärmetauschers 2 außerhalb des zweiten Fixierglieds 8 der Fixiervorrichtung 1 angeordneten Bereich derselben ist am Tragrahmen 3 der Fixiervorrichtung 1 eine Schraubbohrvorrichtung 10 gelagert. Zu dieser Schraubbohrvorrichtung 10 gehört eine Führungsschiene 11, in deren Längsrichtung ein Vorschubschlitten 12 der Schraubbohrvorrichtung 10 hin und her bewegbar ist.

In der in Figur 1 dargestellten Ausführungsform der erfindungsgemäßen Fixiervorrichtung 1 hat das an der Außenmantelfläche 9 des Rotationswärmetauschers 2 angeordnete zweite Fixierglied 8 ein Führungsteil 13, das mit zwei Durchbrechungen 14, 15 ausgestaltet ist. Die beiden Durchbrechungen 14, 15 sind in Axialrichtung des Rotationswärmetauschers 2 in einem Abstand zueinander angeordnet. Zu den ihnen jeweils zugeordneten Stirnflächen 16 weisen die Durchbrechungen 14, 15 etwa denselben Abstand auf.

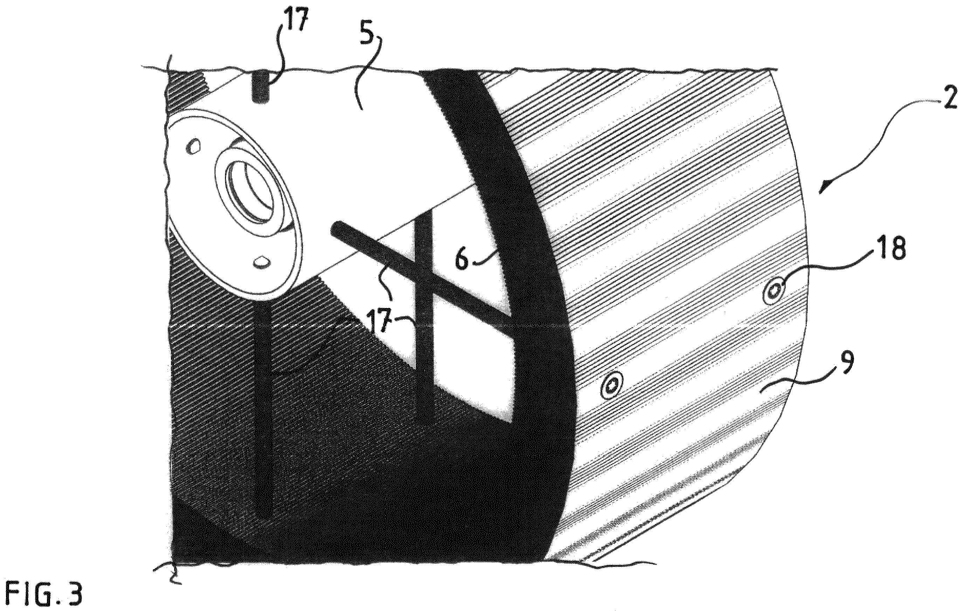

In der Schraubbohrvorrichtung 10 sind in der in Figur 1 dargestellten Ausführungsform zwei Schraubspeichen 17 aufnehmbar. Die beiden Schraubspeichen 17 sind zwischen dem Vorschubschlitten 12 der Schraubbohrvorrichtung 10 einerseits und den Durchbrechungen 14, 15 des Führungsteils 13 des zweiten Fixierglieds 8 der Fixiervorrichtung 1 so halterbar, dass sie in Radialrichtung des Rotationswärmetauschers 2 angeordnet sind. Mittels der Schraubbohrvorrichtung 10 sind die beiden entsprechend in derselben angeordneten Schraubspeichen 17 durch die gewellten und planen Lagen des Wärmespeicherteils 6 des am Tragrahmen 3 der Fixiervorrichtung 1 ortsfest angeordneten Rotationswärmetauschers 2 bis in dessen Nabenteil 5 einbohr- bzw. einschraubbar. Hierbei werden die Schraubspeichen 17 mittels der Schraubbohrvorrichtung 10 und des druckbeaufschlagten Vorschubschlittens 12 von der Außenmantelfläche 9 des Wärmespeicherteils 6 des Rotationswärmetauschers 2 her durch die gewellten und planen Lagen des Wärmespeicherteils 6 des Rotationswärmetauschers 2 unter Ausbildung von Durchbrechungen in den gewellten und planen Lagen des Wärmespeicherteils 6 in das Nabenteil 5 des Rotationswärmetauschers 2 eingeschraubt. Die Länge der Schraubspeichen 17 und der Durchmesser des Rotationswärmetauschers 2 sind hierbei so aufeinander abgestimmt, dass die Schraubspeichen 17 mit ihren in Bezug auf die Schraubvorrichtung 10 distalen Enden in das Nabenteil 5 des Rotationswärmetauschers 2 eingeschraubt sind, wenn insbesondere in Figur 3 gezeigte Schraubköpfe 18 mit ihren Unterflächen an der Außenmantelfläche 9 des Wärmespeicherteils 6 des Rotationswärmetauschers 2 in Anlage sind.

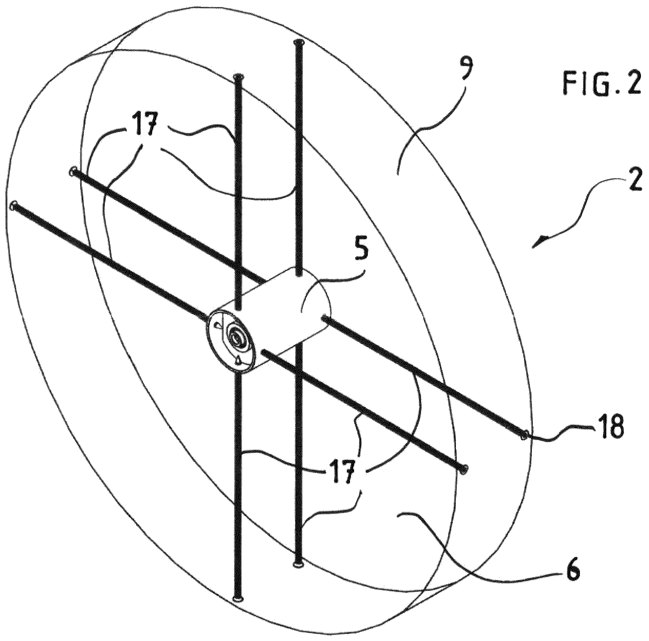

Bei dem in Figur 2 prinzipiell dargestellten Ausführungsbeispiel des mittels der erfindungsgemäßen Fixiervorrichtung 1 hinsichtlich seines Gefüges verfestigten Rotationswärmetauschers 2 wurden in der vorstehend geschilderten Weise insgesamt acht Schraubspeichen 17 eingebracht. Hierzu war der Rotationswärmetauscher 2 in vier zu 90 Grad versetzten Drehstellungen in der Fixiervorrichtung 1 zu fixieren. Jede dieser Schraubspeichen durchdringt das die gewellten und planen Lagen aufweisende Wärmespeicherteil 6 des Rotationswärmetauschers 2 von dessen Außenmantelfläche 9 bis zu dessen Nabenteil 5. Hierdurch wird mit einem vergleichsweise geringen technisch-konstruktiven Aufwand die Möglichkeit geschaffen, das mechanische Gefügte des Rotationswärmetauschers 2 erheblich zu verstärken. Dies wird einerseits dadurch bewerkstelligt, dass die gewellten und planen Lagen des Wärmespeicherteils 6 aufgrund der sie durchdringenden Schraubspeichen 17 fest zueinander angeordnet werden und andererseits dadurch, dass die räumliche Zuordnung zwischen der Außenmantelfläche 9 des Rotationswärmetauschers 2 und dessen Nabenteil 5 fixiert wird.

## Patentansprüche

1. Anordnung aus einer Fixiervorrichtung (1) zur Verfestigung des Gefüges eines Rotationswärmetauschers und einem Rotationswärmetauscher (2), der ein Nabenteil (5) und ein Wärmespeicherteil (6) aus alternierend gewickelten gewellten und planen Lagen aufweist, wobei der Rotationswärmetauscher (2) in der Fixiervorrichtung (1) ortsfest anordbar ist, dass die Fixiervorrichtung (1) eine am Außenumfang des in der Fixiervorrichtung (1) angeordneten Rotationswärmetauschers (2) angeordnete Schraubbohrvorrichtung (10) aufweist, **dadurch gekennzeichnet, dass** die Fixiervorrichtung (1) so ausgebildet ist, dass in dem in der Fixiervorrichtung (1) angeordneten Rotationswärmetauscher (2) zumindest eine Schraubspeiche (17) eingeschraubt ist, die von der Außenmantelfläche (9) aus durch die gewellten und planen Lagen des Wärmespeicherteils (6) bis in das Nabenteil (5) hineinreicht.

2. Anordnung nach Anspruch 1, deren Fixiervorrichtung (1) ein dem Nabenteil (5) des Rotationswärmetauschers (2) zugeordnetes erstes Fixierglied (7) und ein der Außenmantelfläche (9) des Rotationswärmetauschers (2) zugeordnetes zweites Fixierglied (8) aufweist.

3. Anordnung nach Anspruch 2, bei der das zweite Fixierglied (8) der Fixiervorrichtung (1) ein Führungsteil (13) mit zumindest einer Durchbrechung (14, 15) aufweist, durch die hindurch eine Schraubspeiche (17) mittels der Schraubbohrvorrichtung (10) in den Rotationswärmetauscher (2) einbohr- bzw. einschraubbar ist.

4. Anordnung nach Anspruch 3, bei der das Führungsteil (13) der Fixiervorrichtung (1) zwei Durchbrechungen (14, 15) aufweist, die in Axialrichtung des Rotationswärmetauschers (2) zueinander beabstandet sind und jeweils etwa denselben Abstand zu der ihnen jeweils zugeordneten Stirnfläche (16) des Rotationswärmetauschers (2) aufweisen.

5. Anordnung nach einem der Ansprüche 1 bis 4, bei der die Schraubbohrvorrichtung (10) der Fixiervorrichtung (1) zumindest eine Führungsschiene (11) aufweist, die parallel zur Radialrichtung des in der Fixiervorrichtung (1) angeordneten Rotationswärmetauschers (2) verläuft und längs der ein Vorschubschlitten (12) der Schraubbohrvorrichtung (10) zwecks Einbohren bzw. Einschrauben der Schraubspeiche (17) in den Rotationswärmetauscher (2) verfahrbar ist.

6. Verfahren zur Herstellung eines Rotationswärmetauschers (2), bei dem um ein Nabenteil (5) des Rotationswärmetauschers (2) ein Wärmespeicherteil (6) aus alternierenden gewellten und planen Lagen gewickelt wird, und bei dem zur Ausgestaltung einer festen Gefügestruktur des Rotationswärmetauschers (2) sich vom Nabenteil (5) desselben zur Außenumfangsfläche des Wärmespeicherteils (6) erstreckende Speichenglieder in den Rotationswärmetauscher (2) eingebracht werden, **dadurch gekennzeichnet, dass** als Speichenglieder des Rotationswärmetauschers (2) Schraubspeichen (17) eingesetzt werden, die von der Außenmantelfläche (9) des Wärmespeicherteils (6) des Rotationswärmetauschers (2) her durch die gewellten und planen Lagen des Wärmespeicherteils (6) des Rotationswärmetauschers (2) unter Ausbildung von Durchbrechungen in den gewellten und planen Lagen des Wärmespeicherteils (6) und in das Nabenteil (5) des Rotationswärmetauschers (2) eingeschraubt werden, bis sie mit den Unterflächen ihrer Schraubköpfe (18) an der Außenmantelfläche (9) des Wärmespeicherteils (6) anliegen.

7. Rotationswärmetauscher, der gemäß einem Verfahren nach Anspruch 6 hergestellt und dessen Gefüge in einer Anordnung nach einem der Ansprüche 1 bis 5 mittels Schraubspeichen (17) verfestigt ist.

8. Verwendung einer Fixiervorrichtung (1) zur Verfestigung des Gefüges eines Rotationswärmetauschers (2) gemäß einem der Ansprüche 1 bis 5 bei einem Verfahren zur Herstellung eines Rotationswärmetauschers (2) nach Anspruch 6.

## Claims

1. Arrangement comprising a fixing device (1) for consolidating the structure of a rotary heat exchanger and a rotary heat exchanger (2), which has a hub part (5) and a heat storage part (6) made of alternately wound corrugated and flat layers, wherein the rotary heat exchanger (2) can be arranged in a stationary manner in the fixing device (1), and wherein the fixing device (1) has a screw-drilling device (10) arranged on the outer circumference of the rotary heat exchanger (2) arranged in the fixing device (1), **characterized in that** the fixing device (1) is designed such that, in the rotary heat exchanger (2) arranged in the fixing device (1), at least one screw spoke (17) is screwed in, which extends from the outer shell surface (9) through the corrugated and flat layers of the heat storage part (6) into the hub part (5).

2. Arrangement according to claim 1, the fixing device (1) of which has a first fixing member (7) assigned to the hub part (5) of the rotary heat exchanger (2) and a second fixing member (8) assigned to the outer shell surface (9) of the rotary heat exchanger (2).

3. Arrangement according to claim 2, wherein the second fixing member (8) of the fixing device (1) has a guide part (13) with at least one opening (14, 15), through which a screw spoke (17) can be drilled or screwed into the rotary heat exchanger (2) by means of the screw-drilling device (10).

4. Arrangement according to claim 3, wherein the guide part (13) of the fixing device (1) has two openings (14, 15), which are spaced apart from one another in the axial direction of the rotary heat exchanger (2) and each have approximately the same distance from the respective end face (16) of the rotary heat exchanger (2) assigned to them.

5. Arrangement according to any one of claims 1 to 4, wherein the screw-drilling device (10) of the fixing device (1) has at least one guide rail (11), which extends parallel to the radial direction of the rotary heat exchanger (2) arranged in the fixing device (1) and along which a feed carriage (12) of the screw-drilling device (10) is movable for the purpose of drilling or screwing the screw spoke (17) into the rotary heat exchanger (2).

6. Method for producing a rotary heat exchanger (2), in which a heat storage part (6) made of alternating corrugated and flat layers is wound around a hub part (5) of the rotary heat exchanger (2), and in which, for forming a solid structural configuration of the rotary heat exchanger (2), spoke members extending from the hub part (5) thereof to the outer circumferential surface of the heat storage part (6) are introduced into the rotary heat exchanger (2), **characterized in that** screw spokes (17) are used as spoke members of the rotary heat exchanger (2), which are screwed from the outer shell surface (9) of the heat storage part (6) of the rotary heat exchanger (2) through the corrugated and flat layers of the heat storage part (6) of the rotary heat exchanger (2), while forming openings in the corrugated and flat layers of the heat storage part (6), and into the hub part (5) of the rotary heat exchanger (2), until they bear, with the lower surfaces of their screw heads (18), against the outer shell surface (9) of the heat storage part (6).

7. Rotary heat exchanger produced according to a method according to claim 6 and the structure of which is consolidated in an arrangement according to any one of claims 1 to 5 by means of screw spokes (17).

8. Use of a fixing device (1) for consolidating the structure of a rotary heat exchanger (2) according to any one of claims 1 to 5 in a method for producing a rotary heat exchanger (2) according to claim 6.

## Revendications

1. Agencement constitué d'un dispositif de fixation (1) pour la consolidation de la structure d'un échangeur de chaleur rotatif et d'un échangeur de chaleur rotatif (2), qui présente une partie de moyeu (5) et une partie d'accumulation thermique (6) constituée de couches ondulées et planes enroulées en alternance, l'échangeur de chaleur rotatif (2) pouvant être disposé de manière fixe en position dans le dispositif de fixation (1), le dispositif de fixation (1) présentant un dispositif de perçage-vissage (10) disposé sur la périphérie extérieure de l'échangeur de chaleur rotatif (2) disposé dans le dispositif de fixation (1), **caractérisé en ce que** le dispositif de fixation (1) est conçu de telle sorte que, dans l'échangeur de chaleur rotatif (2) disposé dans le dispositif de fixation (1), au moins un rayon vissé (17) est vissé, lequel s'étend depuis la surface d'enveloppe extérieure (9), à travers les couches ondulées et planes de la partie d'accumulation thermique (6), jusque dans la partie de moyeu (5).

2. Agencement selon la revendication 1, dont le dispositif de fixation (1) présente un premier organe de fixation (7) associé à la partie de moyeu (5) de l'échangeur de chaleur rotatif (2) et un second organe de fixation (8) associé à la surface d'enveloppe extérieure (9) de l'échangeur de chaleur rotatif (2).

3. Agencement selon la revendication 2, dans lequel le second organe de fixation (8) du dispositif de fixation (1) présente une partie de guidage (13) avec au moins une ouverture traversante (14, 15), à travers laquelle un rayon vissé (17) peut être introduit par perçage et/ou par vissage dans l'échangeur de chaleur rotatif (2) au moyen du dispositif de perçage-vissage (10).

4. Agencement selon la revendication 3, dans lequel la partie de guidage (13) du dispositif de fixation (1) présente deux ouvertures traversantes (14, 15), qui sont espacées l'une de l'autre dans la direction axiale de l'échangeur de chaleur rotatif (2) et présentent chacune sensiblement la même distance par rapport à la face frontale (16) de l'échangeur de chaleur rotatif (2) qui leur est respectivement associée.

5. Agencement selon l'une quelconque des revendications 1 à 4, dans lequel le dispositif de perçage-vissage (10) du dispositif de fixation (1) présente au moins un rail de guidage (11), qui s'étend parallèlement à la direction radiale de l'échangeur de chaleur rotatif (2) disposé dans le dispositif de fixation (1) et le long duquel un chariot d'avance (12) du dispositif de perçage-vissage (10) est déplaçable aux fins d'introduction par perçage et/ou par vissage du rayon vissé (17) dans l'échangeur de chaleur rotatif (2).

6. Procédé de fabrication d'un échangeur de chaleur rotatif (2), dans lequel une partie d'accumulation thermique (6) constituée de couches ondulées et planes alternées est enroulée autour d'une partie de moyeu (5) de l'échangeur de chaleur rotatif (2), et dans lequel, pour la réalisation d'une structure solide de l'échangeur de chaleur rotatif (2), des éléments de rayon s'étendant depuis la partie de moyeu (5) de celui-ci jusqu'à la surface périphérique extérieure de la partie d'accumulation thermique (6) sont introduits dans l'échangeur de chaleur rotatif (2), **caractérisé en ce que** des rayons vissés (17) sont utilisés comme éléments de rayon de l'échangeur de chaleur rotatif (2), lesquels sont vissés depuis la surface d'enveloppe extérieure (9) de la partie d'accumulation thermique (6) de l'échangeur de chaleur rotatif (2), à travers les couches ondulées et planes de la partie d'accumulation thermique (6) de l'échangeur de chaleur rotatif (2), avec formation d'ouvertures traversantes dans les couches ondulées et planes de la partie d'accumulation thermique (6), et dans la partie de moyeu (5) de l'échangeur de chaleur rotatif (2), jusqu'à ce qu'ils reposent, par les surfaces inférieures de leurs têtes de vis (18), contre la surface d'enveloppe extérieure (9) de la partie d'accumulation thermique (6).

7. Échangeur de chaleur rotatif, fabriqué selon un procédé selon la revendication 6 et dont la structure est consolidée, dans un agencement selon l'une quelconque des revendications 1 à 5, au moyen de rayons vissés (17).

8. Utilisation d'un dispositif de fixation (1) pour la consolidation de la structure d'un échangeur de chaleur rotatif (2) selon l'une quelconque des revendications 1 à 5 dans un procédé de fabrication d'un échangeur de chaleur rotatif (2) selon la revendication 6.
